(19) Europäisches Patentamt
European Patent Office
Office européen des brevets

(11) **EP 3 706 043 A1**

(12) **EUROPEAN PATENT APPLICATION**
published in accordance with Art. 153(4) EPC

(43) Date of publication:
**09.09.2020 Bulletin 2020/37**

(51) Int Cl.:
***G06K 9/62*** *(2006.01)*

(21) Application number: **18873772.0**

(22) Date of filing: **16.10.2018**

(86) International application number:
**PCT/CN2018/110519**

(87) International publication number:
**WO 2019/085750 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2017 CN 201711047050**

(71) Applicant: **GUANGDONG OPPO MOBILE TELECOMMUNICATIONS CORP., LTD.**
**Wusha, Chang'an**
**Dongguan,**
**Guangdong 523860 (CN)**

(72) Inventor: **LIANG, Kun**
**Dongguan**
**Guangdong 523860 (CN)**

(74) Representative: **Mewburn Ellis LLP**
**Aurora Building**
**Counterslip**
**Bristol BS1 6BX (GB)**

(54) **APPLICATION PROGRAM CONTROL METHOD AND APPARATUS, MEDIUM, AND ELECTRONIC DEVICE**

(57) A method and device for managing and controlling an application, a medium, and an electronic device are provided. The method includes the following. Historical feature information $x_i$ is obtained. A first training model is generated based on a back propagation (BP) neural network algorithm. A second training model is generated based on a non-linear support vector machine algorithm. Upon detecting that the application is switched to background, current feature information s associated with the application is taken into the first training model and the second training model for calculation. Whether the application needs to be closed is determined.

FIG. 3

**Description**

CROSS-REFERENCE TO RELATED APPLICATION(S)

This application claims priority to Chinese Patent Application No. 201711047050.5, filed on October 31, 2017, and entitled "METHOD AND DEVICE FOR MANAGING AND CONTROLLING APPLICATION, MEDIUM, AND ELECTRONIC DEVICE", the entire disclosure of which is hereby incorporated by reference.

TECHNICAL FIELD

This disclosure relates to the field of electronic terminals, and more particularly to a method and device for managing and controlling an application, a medium, and an electronic device.

BACKGROUND

Multiple applications in terminals may be used every day. Generally, if an application switched to background of the terminal is not cleaned up in time, runinng of the application in the background still occupies valuable system memory resources and increases system power consumption. To this end, it is urgent to provide a method and device for managing and controlling an application, a medium, and an electronic device.

SUMMARY

Technical problems: according to embodiments, a method and device for managing and controlling an application, a medium, and an electronic device are provided, which can intelligently close an application.

Technical solutions are as follows.

According to embodiments, a method for managing and controlling an application is provided. The method is applicable to an electronic device. A sample vector set associated with the application is obtained, where the sample vector set contains a plurality of sample vectors, and each of the plurality of sample vectors includes multi-dimensional historical feature information $x_i$ associated with the application. A first training model is generated by performing calculation on the sample vector set based on a back propagation (BP) neural network algorithm, and a second training model is generated based on a non-linear support vector machine algorithm. Upon detecting that the application is switched to background, first closing probability is obtained by taking current feature information s associated with the application into the first training model for calculation. When the first closing probability is within a hesitation interval, second closing probability is obtained by taking the current feature information s associated with the application into the second training model for calculation. When the second closing probability is greater than a judgment value, close the application.

According to embodiments, a device for managing and controlling an application is provided. The device includes an obtaining module, a generating module, and a calculating module. The obtaining module is configured to obtain a sample vector set associated with the application, where the sample vector set contains a plurality of sample vectors, and each of the plurality of sample vectors includes multi-dimensional historical feature information $x_i$ associated with the application. The generating module is configured to generate a first training model by performing calculation on the sample vector set based on a BP neural network algorithm, and generate a second training model based on a non-linear support vector machine algorithm. The calculating module is configured to obtain first closing probability by taking current feature information $s$ associated with the application into the first training model for calculation upon detecting that the application is switched to background, obtain second closing probability by taking the current feature information s associated with the application into the second training model for calculation when the first closing probability is within a hesitation interval, and close the application when the second closing probability is greater than a judgment value.

According to embodiments, a medium is provided. The medium is configured to store a plurality of instructions. The instructions are, when executed by a processor, operable with the processor to execute the above method for managing and controlling an application.

According to embodiments, an electronic device is provided. The electronic device includes a processor and a memory. The electronic device is electrically coupled to the memory. The memory is configured to store instructions and data. The instructions, when executed by the processor, are operable with the processor to execute the following operations. A sample vector set associated with an application is obtained, where the sample vector set contains a plurality of sample vectors, and each of the plurality of sample vectors includes multi-dimensional historical feature information $x_i$ associated with the application. A first training model is generated by performing calculation on the sample vector set based on a BP neural network algorithm, and a second training model is generated based on a non-linear support vector machine algorithm. Upon detecting that the application is switched to background, first closing probability is obtained by taking current feature information s associated with the application into the first training model for calculation.

When the first closing probability is within a hesitation interval, second closing probability is obtained by taking the current feature information s associated with the application into the second training model for calculation. When the second closing probability is greater than a judgment value, close the application.

Advantageous effects: according to embodiments, a method and device for managing and controlling an application, a medium, and an electronic device are provided, which can intelligently close an application.

BRIEF DESCRIPTION OF THE DRAWINGS

To illustrate technical solutions embodied by embodiments of the disclosure more clearly, the following briefly introduces accompanying drawings required for describing the embodiments. Apparently, the accompanying drawings in the following description merely illustrate some embodiments of the disclosure. Those of ordinary skill in the art may also obtain other drawings based on these accompanying drawings without creative efforts.

FIG. 1 is a schematic diagram illustrating a device for managing and controlling an application according to embodiments.
FIG. 2 is a schematic diagram illustrating an application scenario of a device for managing and controlling an application according to embodiments.
FIG. 3 is a schematic flow chart illustrating a method for managing and controlling an application according to embodiments.
FIG. 4 is a schematic flow chart illustrating a method for managing and controlling an application according to other embodiments.
FIG. 5 is a schematic structural diagram illustrating a device according to embodiments.
FIG. 6 is a schematic structural diagram illustrating a device according to other embodiments.
FIG. 7 is a schematic structural diagram illustrating an electronic device according to embodiments.
FIG. 8 is a schematic structural diagram illustrating an electronic device according to other embodiments.

DETAILED DESCRIPTION

Hereinafter, technical solutions embodied by the embodiments of the disclosure will be described in a clear and comprehensive manner with reference to the accompanying drawings intended for the embodiments. It is evident that the embodiments described herein constitute merely some rather than all of the embodiments of the disclosure, and that those of ordinary skill in the art will be able to derive other embodiments based on these embodiments without making creative efforts, which all such derived embodiments shall all fall in the protection scope of the disclosure.

According to embodiments, a method for managing and controlling an application is provided. The method is applicable to an electronic device and includes the following. A sample vector set associated with the application is obtained, where the sample vector set contains a plurality of sample vectors, and each of the plurality of sample vectors includes multi-dimensional historical feature information $x_i$ associated with the application. A first training model is generated by performing calculation on the sample vector set based on a back propagation (BP) neural network algorithm. A second training model is generated based on a non-linear support vector machine algorithm. Upon detecting that the application is switched to background, first closing probability is obtained by taking current feature information s associated with the application into the first training model for calculation. When the first closing probability is within a hesitation interval, second closing probability is obtained by taking the current feature information s associated with the application into the second training model for calculation. When the second closing probability is greater than a judgment value, close the application.

In some embodiments, the first training model is generated by performing calculation on the sample vector set based on the BP neural network algorithm as follows. A network structure is defined. The first training model is obtained by taking the sample vector set into the network structure for calculation.

In some embodiments, the network structure is defined as follows. An input layer is set, where the input layer includes N nodes, and the number of nodes of the input layer is the same as the number of dimensions of the historical feature information $x_i$. A hidden layer is set, where the hidden layer includes $M$ nodes. A classification layer is set, where the classification layer is based on a softmax function, where the softmax function is: $p(c = k \mid z) = \dfrac{e^{Z_k}}{\sum_{j=1}^{C} e^{Z_k}}$, where

$p$ is predicted probability, $Z_k$ is a median value, C is the number of predictied result categories, and $e^{Zj}$ is a $j$th median value. An output layer is set, where the output layer includes two nodes. An activation function is set, where the activation function is based on a sigmoid function, where the sigmoid function is: $f(x) = \dfrac{1}{1+e^{-x}}$, where $f(x)$ has a range of 0 to 1. A batch size is set, where the batch size is A. A learning rate is set, where the learning rate is *B*.

In some embodiments, the first training model is obtained by taking the sample vector set into the network structure for calculation as follows. An output value of the input layer is obtained by inputting the sample vector set into the input layer for calculation. An output value of the hidden layer is obtained by inputting the output value of the input layer into the hidden layer. Predicted probability $[p_1\ p_2]^T$ is obtained by inputting the output value of the hidden layer into the classification layer for calculation, where $p_1$ represents predicted closing probability and $p_2$ represents predicted retention probability. A predicted result *y* is obtained by inputting the predicted probability into the output layer for calculation, where $y=[1\ 0]^T$ when $p_1$ is greater than $p_2$, and $y=[0\ 1]^T$ when $p_1$ is smaller than or equal to $p_2$. The first training model is obtained by modifying the network structure according to the predicted result *y*.

In some embodiments, the second training model is generated based on the non-linear support vector machine algorithm as follows. For each of the sample vectors of the sample vector set, a labeling result $y_i$ for the sample vector is generated by labeling the sample vector. The second training model is obtained by defining a Gaussian kernel function.

In some embodiments, when the second closing probability is smaller than the judgment value, retain the application.

In some embodiments, the method further includes the following. When the first closing probability is beyond the hesitation interval, whether the first closing probability is smaller than a minimum value of the hesitation interval or greater than a maximum value of the hesitation interval is determined.

In some embodiments, upon determining that the first closing probability is smaller than the minimum value of the hesitation interval, retain the application. Upon determining that the first closing probability is greater than the maximum value of the hesitation interval, close the application.

In some embodiments, the first closing probability is obtained by taking the current feature information s associated with the application into the first training model for calculation upon detecting that the application is switched to the background, the second closing probability is obtained by taking the current feature information s associated with the application into the second training model for calculation when the first closing probability is within the hesitation interval, and close the application when the second closing probability is greater than the judgment value as follows. The current feature information s associated with the application is collected. The first closing probability is obtained by taking the current feature information s into the first training model for calculation. Whether the first closing probability is within the hesitation interval is determined. The second closing probability is obtained by taking the current feature information s associated with the application into the second training model for calculation. Whether the second closing probability is greater than the judgment value is determined. Whether the first closing probability is smaller than a minimum value of the hesitation interval or greater than a maximum value of the hesitation interval is determined.

According to embodiments, a device for managing and controlling an application is provided. The device includes an obtaining module, a generating module, and a calculating module. The obtaining module is configured to obtain a sample vector set associated with the application, where the sample vector set contains a plurality of sample vectors, and each of the plurality of sample vectors includes multi-dimensional historical feature information $x_i$ associated with the application. The generating module is configured to generate a first training model by performing calculation on the sample vector set based on a BP neural network algorithm, and generate a second training model based on a non-linear support vector machine algorithm. The calculating module is configured to obtain first closing probability by taking current feature information s associated with the application into the first training model for calculation upon detecting that the application is switched to background, obtain second closing probability by taking the current feature information s associated with the application into the second training model for calculation when the first closing probability is within a hesitation interval, and close the application when the second closing probability is greater than a judgment value.

According to embodiments, a medium is provided. The medium is configured to store a plurality of instructions. The instructions are, when executed by a processor, operable with the processor to execute the above method for managing and controlling an application

According to embodiments, an electronic device is provided. The electronic device includes a processor and a memory. The electronic device is electrically coupled to the memory. The memory is configured to store instructions and data. The instructions, when executed by the processor, are operable with the processor to execute the following operations. A sample vector set associated with an application is obtained, where the sample vector set contains a plurality of sample vectors, and each of the plurality of sample vectors includes multi-dimensional historical feature information $x_i$ associated with the application. A first training model is generated by performing calculation on the sample vector set based on a BP neural network algorithm, and a second training model is generated based on a non-linear support vector machine algorithm. Upon detecting that the application is switched to background, first closing probability is obtained by taking current feature information s associated with the application into the first training model for calculation. When the first closing probability is within a hesitation interval, second closing probability is obtained by taking the current feature information s associated with the application into the second training model for calculation. When the second closing probability is greater than a judgment value, close the application.

In some embodiments, the instructions operable with the processor to generate the first training model by performing calculation on the sample vector set based on the BP neural network algorithm are operable with the processor to: define a network structure; and obtain the first training model by taking the sample vector set into the network structure for calculation.

In some embodiments, the instructions operable with the processor to define the network structure are operable with the processor to: set an input layer, where the input layer includes N nodes, and the number of nodes of the input layer is the same as the number of dimensions of the historical feature information $x_i$; set a hidden layer, where the hidden layer includes $M$ nodes; set a classification layer, where the classification layer is based on a softmax function, where the softmax function is:

$$p(c = k \mid z) = \frac{e^{z_k}}{\sum_{j=1}^{C} e^{z_k}},$$

where $p$ is predicted probability, $Z_k$ is a median value, $C$ is the number of predictied result categories, and $e^{Zj}$ is a $j^{th}$ median value; set an output layer, where the output layer includes two nodes; set an activation function, where the activation function is based on a sigmoid function, where the sigmoid function is: $f(x) = \dfrac{1}{1 + e^{-x}}$, where $f(x)$ has a range of 0 to 1; set a batch size, where the batch size is A; and set a learning rate, where the learning rate is $B$.

In some embodiments, the instructions operable with the processor to obtain the first training model by taking the sample vector set into the network structure for calculation are operable with the processor to: obtain an output value of the input layer by inputting the sample vector set into the input layer for calculation; obtain an output value of the hidden layer by inputting the output value of the input layer into the hidden layer; obtain predicted probability $[p_1 \, p_2]^T$ by inputting the output value of the hidden layer into the classification layer for calculation, where $p_1$ represents predicted closing probability and $p_2$ represents predicted retention probability; obtain a predicted result y by inputting the predicted probability into the output layer for calculation, where $y=[1\ 0]^T$ when $p_1$ is greater than $p_2$, and $y=[0\ 1]^T$ when $p_1$ is smaller than or equal to $p_2$; and obtain the first training model by modifying the network structure according to the predicted result y.

In some embodiments, the instructions operable with the processor to generate the second training model based on the non-linear support vector machine algorithm are operable with the processor to: for each of the sample vectors of the sample vector set, generate a labeling result $y_i$ for the sample vector by labeling the sample vector; and obtain the second training model by defining a Gaussian kernel function.

In some embodiments, when the second closing probability is smaller than the judgment value, retain the application.

In some embodiments, the instructions are further operable with the processor to determine whether the first closing probability is smaller than a minimum value of the hesitation interval or greater than a maximum value of the hesitation interval, when the first closing probability is beyond the hesitation interval.

In some embodiments, upon determining that the first closing probability is smaller than the minimum value of the hesitation interval, retain the application. Upon determining that the first closing probability is greater than the maximum value of the hesitation interval, close the application.

In some embodiments, the instructions operable with the processor to obtain the first closing probability by taking the current feature information s associated with the application into the first training model for calculation upon detecting that the application is switched to the background, obtain the second closing probability by taking the current feature information s associated with the application into the second training model for calculation when the first closing probability is within the hesitation interval, and close the application when the second closing probability is greater than the judgment value are operable with the processor to: collect the current feature information s associated with the application; obtain the first closing probability by taking the current feature information s into the first training model for calculation; determine whether the first closing probability is within the hesitation interval; obtain the second closing probability by taking the current feature information s associated with the application into the second training model for calculation; determine whether the second closing probability is greater than the judgment value; and determine whether the first closing probability is smaller than a minimum value of the hesitation interval or greater than a maximum value of the hesitation interval.

The method for managing and controlling an application provided by embodiments of the disclosure may be applicable to an electronic device. The electronic device may be a smart mobile electronic device such as a smart bracelet, a smart phone, a tablet based on Apple® or Android® systems, a laptop based on Windows or Linux® systems, or the like. It should be noted that, the application may be any application such as a chat application, a video application, a playback application, a shopping application, a bicycle-sharing application, a mobile banking application, or the like.

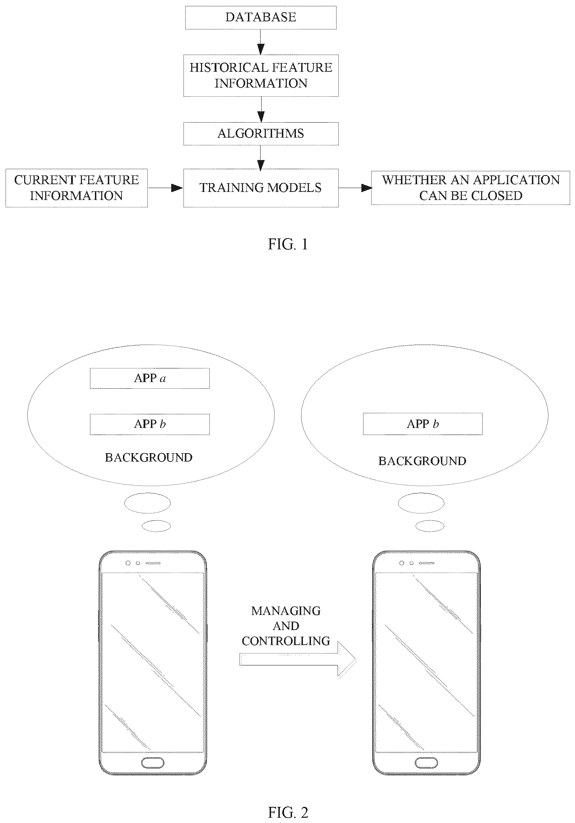

FIG. 1 is a schematic diagram illustrating a device for managing and controlling an application according to embodiments. The device is configured to obtain historical feature information $x_i$ associated with the application from a database, and obtain training models by taking the historical feature information $x_i$ into algorithms for calculation. The device is further configured to take current feature information $s$ associated with the application into the training models for calculation, and determine whether the application can be closed based on calculation results, so as to manage and control the application, such as closing or freezing the application.

FIG. 2 is a schematic diagram illustrating an application scenario of a method for managing and controlling an application according to embodiments. In one embodiment, historical feature information $x_i$ associated with the application is obtained from a database, and then training models are obtained by taking the historical feature information $x_i$ into algorithms for calculation. Further, upon detecting that the application is switched to the background of the electronic device, the device for managing and controlling an application takes current feature information $s$ associated with the application into the training models for calculation, and determines whether the application can be closed based on calculation results. As an example, historical feature information $x_i$ associated with *APP a* is obtained from the database and then the training models are obtain by taking the historical feature information $x_i$ into algorithms for calculation. Upon detecting that *APP a* is switched to the background of the electronic device, the device for managing and controlling an application takes current feature information $s$ associated with *APP a* into the training models for calculation, and closes *APP a* upon determining that *APP a* can be closed based on calculation results. As another example, upon detecting that *APP b* is switched to the background of the electronic device, the device for managing and controlling an application takes current feature information $s$ associated with *APP b* into training models for calculation, retain *APP b* upon determining that *APP b* needs to be retained based on calculation results.

According to embodiments of the disclosure, a method for managing and controlling an application is provided. An execution body of the method may be a device for managing and controlling an application of the embodiments of the disclosure or an electronic device integrated with the device for managing and controlling an application. The device for managing and controlling an application may be implemented by means of hardware or software.

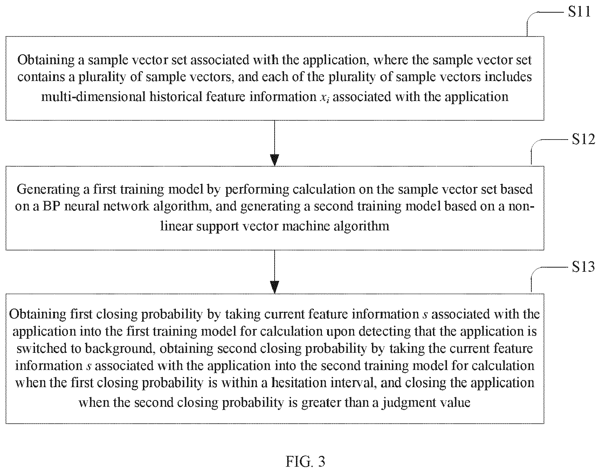

FIG. 3 is a schematic flow chart illustrating a method for managing and controlling an application according to embodiments. As illustrated in FIG. 3, the method according to the embodiments is applicable to an electronic device and includes the following.

At block S 11, a sample vector set associated with the application is obtained, where the sample vector set contains multiple sample vectors, and each of the multiple sample vectors includes multi-dimensional historical feature information $x_i$ associated with the application.

The sample vector set associated with the application may be obtained from a sample database, where each sample vector of the sample vector set includes multi-dimensional historical feature information $x_i$ associated with the application.

For the multi-dimensional historical feature information associated with the application, reference may be made to feature information of respective dimensions listed in Table 1.

Table 1

| Dimension | Feature information |
|---|---|
| 1 | Time length between a time point at which the application was recently switched to the background and a current time point |
| 2 | Accumulated duration of a screen-off state during a period between a time point at which the application was recently switched to the background and the current time point |
| 3 | a screen state (i.e., a screen-on state or a screen-off state) at the current time point |
| 4 | Ratio of the number of time lengths falling within a range of 0-5 minutes to the number of all time lengths in a histogram associated with duration that the application is in the background |
| 5 | Ratio of the number of time lengths falling within a range of 5-10 minutes to the number of all time lengths in the histogram associated with duration that the application is in the background |
| 6 | Ratio of the number of time lengths falling within a range of 10-15 minutes to the number of all time lengths in the histogram associated with duration that the application is in the background |
| 7 | Ratio of the number of time lengths falling within a range of 15-20 minutes to the number of all time lengths in the histogram associated with duration that the application is in the background |

(continued)

| Dimension | Feature information |
|---|---|
| 8 | Ratio of the number of time lengths falling within a range of 20-25 minutes to the number of all time lengths in the histogram |
| | associated with duration that the application is in the background |
| 9 | Ratio of the number of time lengths falling within a range of 25-30 minutes to the number of all time lengths in the histogram associated with duration that the application is in the background |
| 10 | Ratio of the number of time lengths falling within a range of more than 30 minutes to the number of all time lengths in the histogram associated with duration that the application is in the background |

It should be noted that, the 10-dimensional feature information illustrated in Table 1 is merely an exemplary embodiment of the disclosure, and the multi-dimensional historical feature information of the disclosure includes, but is not limited to, the above 10-dimensional historical feature information illustrated in Table 1. The multi-dimensional historical feature information may include one of, at least two of, or all of the dimensions listed in Table 1, or may further include feature information of other dimensions (e.g., a charging connection state (i.e., not being charged or being charged) at the current time point, current remaining electric quantity, a WiFi connection state at the current time point, or the like), and which is not limited.

In some embodiments, the multi-dimensional historical feature information is embodied as 6-dimensional historical feature information. The 6-dimensional historical feature information is as follows. A: duration that the application resides in the background. B: a screen state (1: screen-on, 0: screen-off). C: number of times the application is used in a week. D: accumulated duration that the application is used in the week. E: a WiFi connection state (1: connected, 0: disconnected). F: a charging connection state (1: being charged, 0: not being charged).

At block S12, a first training model is generated by performing calculation on the sample vector set based on a BP neural network algorithm, and a second training model is generated based on a non-linear support vector machine algorithm.

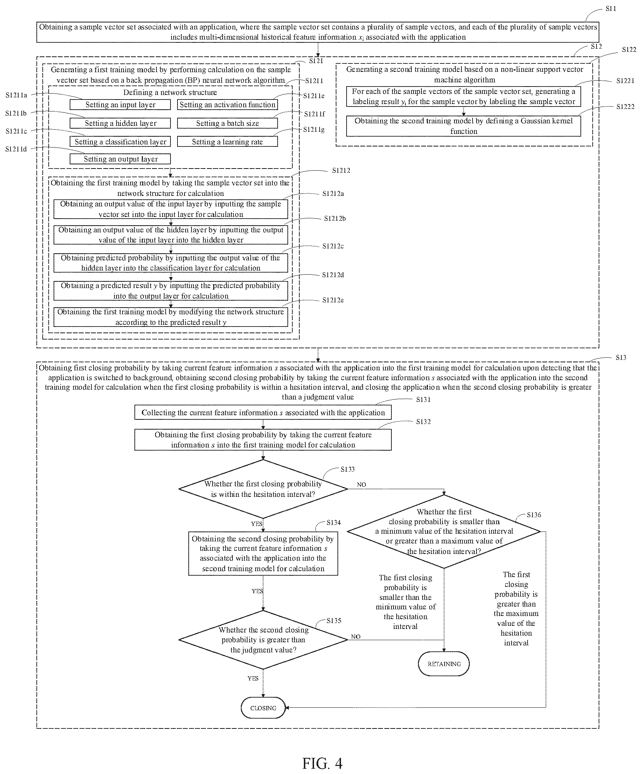

FIG. 4 is a schematic flow chart illustrating a method for managing and controlling an application according to embodiments. As illustrated in FIG. 4, the operations at block S12 includes operations at block S121 and operations at block S122. At block S121, the first training model is generated by performing calculation on the sample vector set based on the BP neural network algorithm. At block S122, the second training model is generated based on the non-linear support vector machine algorithm. It should be noted that, the order of execution of the operations at block S121 and the operations at block S122 is not limited according to embodiments of the disclosure.

In some embodiments, the operations at block S121 include the following. At block S1211, a network structure is defined. At block S1212, the first training model is obtained by taking the sample vector set into the network structure for calculation.

In some embodiments, at block S1211, the network structure is defined as follows.

At block S1211a, an input layer is set, where the input layer includes N nodes, and the number of nodes of the input layer is the same as the number of dimensions of the historical feature information $x_i$.

In some embodiments, to simplify the calculation, the number of dimensions of the historical feature information $x_i$ is set to be less than 10, and the number of nodes of the input layer is set to be less than 10. For example, the historical feature information $x_i$ is 6-dimensional historical feature information, and the input layer includes 6 nodes.

At block S1211b, a hidden layer is set, where the hidden layer includes $M$ nodes.

In some embodiments, the hidden layer includes multiple hidden sublayers. To simplify the calculation, the number of nodes of each of the hidden sublayers is set to be less than 10. For example, the hidden layer includes a first hidden sublayer, a second hidden sublayer, and a third hidden sublayer. The first hidden sublayer includes 10 nodes, the second hidden sublayer includes 5 nodes, and the third hidden sublayer includes 5 nodes.

At block S 1211c, a classification layer is set, where the classification layer is based on a softmax function, where the softmax function is: $p(c = k \mid z) = \dfrac{e^{Z_k}}{\sum_{j=1}^{C} e^{Z_k}}$ , where $p$ is predicted probability, $Z_k$ is a median value, $C$ is the number of predictied result categories, and $e^{Zj}$ is a $j$th median value.

At block S 1211d, an output layer is set, where the output layer includes 2 nodes.

At block S 1211e, an activation function is set, where the activation function is based on a sigmoid function, where the sigmoid function is: $f(x) = \dfrac{1}{1+e^{-x}}$, where $f(x)$ has a range of 0 to 1.

At block S 1211f, a batch size is set, where the batch size is A;

The batch size can be flexibly adjusted according to actual application scenarios. In some embodiments, the batch size is in a range of 50-200. For example, the batch size is 128.

At block S 1211g, a learning rate is set, where the learning rate is $B$.

The learning rate can be flexibly adjusted according to actual application scenarios. In some embodiments, the learning rate is in a range of 0.1-1.5. For example, the learning rate is 0.9.

It should be noted that, the order of execution of the operations at block S 1211a, the operations at block S 1211b, the operations at block S1211c, the operations at block S 1211d, the operations at block S 1211e, the operations at block S 1211f, and the operations at block S 1211g can be flexibly adjusted, which is not limited according to embodiments of the disclosure.

In some embodiments, at block S 1212, the first training model is obtained by taking the sample vector set into the network structure for calculation as follows.

At block S 1212a, an output value of the input layer is obtained by inputting the sample vector set into the input layer for calculation.

At block S 1212b, an output value of the hidden layer is obtained by inputting the output value of the input layer into the hidden layer.

The output value of the input layer is an input value of the hidden layer. In some embodiments, the hidden layer includes multiple hidden sublayers. The output value of the input layer is an input value of a first hidden sublayer, an output value of the first hidden sublayer is an input value of a second hidden sublayer, an output value of the second hidden sublayer is an input value of a third hidden sublayer, and so forth.

At block S 1212c, predicted probability $[p_1\ p_2]^T$ is obtained by inputting the output value of the hidden layer into the classification layer for calculation, where $p_1$ represents predicted closing probability and $p_2$ represents predicted retention probability.

The output value of the hidden layer is an input value of the classification layer. In some embodiments, the hidden layer includes multiple hidden sublayers. An output value of the last hidden sublayer is the input value of the classification layer.

At block S 1212d, a predicted result y is obtained by inputting the predicted probability into the output layer for calculation, where $y=[1\ 0]^T$ when $p_1$ is greater than $p_2$, and $y=[0\ 1]^T$ when $p_1$ is smaller than or equal to $p_2$.

An output value of the classification layer is an input value of the output layer.

At block S 1212e, the first training model is obtained by modifying the network structure according to the predicted result y.

In some embodiments, the operations at block S122 include the following. At block S1221, for each of the sample vectors of the sample vector set, a labeling result $y_i$ for the sample vector is generated by labeling the sample vector. At block S1222, the second training model is obtained by defining a Gaussian kernel function.

In some embodiments, at block S1221, for each of the sample vectors of the sample vector set, the labeling result $y_i$ for the sample vector is generated by labeling the sample vector as follows. For each of the sample vectors of the sample vector set, the sample vector is labelled. Each sample vector is taken into the non-linear support vector machine algorithm to obtain a labeling result $y_i$, and accordingly a sample-vector result set $T = \{(x_1, y_1), (x_2, y_2),..., (x_m, y_m)\}$ is obtained. Input the sample vectors $x_i \in R^n$, $y_i \in \{+1, -1\}$, $i = 1,2,3,...,n$, $R^n$ represents an input space corresponding to the sample vector, $n$ represents the number of dimensions of the input space, and $y_i$ represents a labeling result corresponding to the input sample vector.

In some embodiments, at block S1222, the second training model is obtained by defining the Gaussian kernel function as follows. In an implementation, the kernal function is the Gaussian kernel function

$K(x, x_i) = \exp\left(-\dfrac{\|x-x_i\|^2}{2\sigma^2}\right)$, where $K(x, x_i)$ is an Euclidean distance (i.e., Euclidean metric) from any point $x$ to

a center $x_i$ in a space, and $\sigma$ is a width parameter of the Gaussian kernel function.

In some embodiments, the second training model is obtained by defining the Gaussian kernel function as follows. The Gaussian kernel function is defined. The second training model is obtained by defining a model function and a classification decision function according to the Gaussian kernel function. The model function is:

$\sum\limits_{i=1}^{m} \alpha_i y_i K(x, x_i) + b = 0$. The classification decision function is:

$$f(x) = \begin{cases} +1, & if \sum_{i=1}^{m} \alpha_i y_i K(x, x_i) + b > 0 \\ -1, & if \sum_{i=1}^{m} \alpha_i y_i K(x, x_i) + b < 0 \end{cases},$$

where $f(x)$ is a classification decision value, $a_i$ is a Lagrange factor, $b$ is a bias coefficient. When $f(x)=1$, it means that the application needs to be closed. When $f(x)=-1$, it means that the application needs to be retained.

In some embodiments, by defining the Gaussian kernel function and defining the model function and the classification decision function according to the Gaussian kernel function, the second training model is obtained as follows. The Gaussian kernel function is defined. The model function and the classification decision function are defined according to the Gaussian kernel function. An objective optimization function is defined according to the model function and the classification decision function. The second training model is obtained by obtaining an optimal solution of the objective optimization function according to a sequential minimal optimization algorithm. The objective optimization

function is: $\min_{\alpha} \frac{1}{2} \sum_{i=1}^{m} \sum_{j=1}^{m} \alpha_i \alpha_j y_i y_j (x_i \bullet x_j) - \sum_{i=1}^{m} \alpha_i$ , where the objective optimization function is used to obtain a minimum

$$s.t. \quad \sum_{i=1}^{m} \alpha_i y_i = 0, \alpha_i > 0, i = 1, 2, ..., m$$

value for parameters ($a_1, a_2, ..., a_i$), $a_i$ corresponds to a training sample ($x_i, y_i$), and the total number of variables is equal to capacity $m$ of the training samples.

In some embodiments, the optimal solution is recorded as $\alpha^* = (\alpha_1^*, \alpha_2^*, ..., \alpha_m^*)$, the second training model

is: $g(x) = \sum_{i=1}^{m} \alpha_i y_i K(x, x_i) + b$, where $g(x)$ is an output value of the second training model, and the output value is second closing probability.

At block S13, upon detecting that the application is switched to background, first closing probability is obtained by taking current feature information $s$ associated with the application into the first training model for calculation. When the first closing probability is within a hesitation interval (i.e., a predetermined interval), second closing probability is obtained by taking the current feature information s associated with the application into the second training model for calculation. When the second closing probability is greater than a judgment value (i.e., a predetermined value), close the application.

In some embodiments, as illustrated in FIG. 4, the operations at block S13 include the following.

At block S131, the current feature information s associated with the application is collected.

The number of dimensions of the collected current feature information $s$ associated with the application is the same as the number of dimensions of the collected historical feature information $x_i$ associated with the application.

At block S132, the first closing probability is obtained by taking the current feature information $s$ into the first training model for calculation.

Probability $[p_1' \, p_2']^T$ determined in the classification layer can be obtained by taking the current feature information $s$ into the first training model for calculation, where $p_1'$ is the first closing probability and $p_2'$ is first retention probability.

At block S133, whether the first closing probability is within the hesitation interval is determined.

The hesitation interval is in a range of 0.4-0.6 for example, the minimum value of the hesitation interval is 0.4, and the maximum value of the hesitation interval is 0.6. In some embodiments, when the first closing probability is within the hesitation interval, proceed to operations at block S134 and operations at block S135. When the first closing probability is beyond the hesitation interval, proceed to operations at block S136.

At block S134, the second closing probability is obtained by taking the current feature information $s$ associated with the application into the second training model for calculation.

The current feature information $s$ is taken into the formula $g(s) = \sum_{i=1}^{m} \alpha_i y_i K(s, x_i) + b$ to calculate the second closing probability $g(s)$.

At block S135, whether the second closing probability is greater than the judgment value is determined.

It should be noted that, the judgment value may be set to be 0. When $g(s) > 0$, close the application; when $g(s) < 0$, retain the application.

At block S136, whether the first closing probability is smaller than a minimum value of the hesitation interval or greater than a maximum value of the hesitation interval is determined.

When the first closing probability is smaller than the minimum value of the hesitation interval, retain the application. When the first closing probability is greater than the maximum value of the hesitation interval, close the application.

According to the method for managing and controlling an application of embodiments of the disclosure, the historical feature information $x_i$ is obtained. The first training model is generated based on the BP neural network algorithm, and the second training model is generated based on the non-linear support vector machine algorithm. Upon detecting that the application is switched to the background, the first closing probability is obtained by taking the current feature information $s$ associated with the application into the first training model for calculation. When the first closing probability is within the hesitation interval, the second closing probability is obtained by taking the current feature information $s$ associated with the application into the second training model for calculation. Then, whether the application needs to be closed can be determined. In this way, it is possible to intelligently close the application.

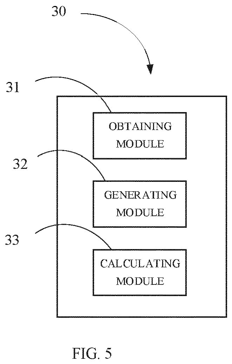

FIG. 5 is a schematic structural diagram illustrating a device for managing and controlling an application according to embodiments. As illustrated in FIG. 5, a device 30 includes an obtaining module 31, a generating module 32, and a calculating module 33.

It should be noted that, the application may be any application such as a chat application, a video application, a playback application, a shopping application, a bicycle-sharing application, a mobile banking application, or the like.

The obtaining module 31 is configured to obtain a sample vector set associated with an application, where the sample vector set contains multiple sample vectors, and each of the multiple sample vectors includes multi-dimensional historical feature information $x_i$ associated with the application.

The sample vector set associated with the application may be obtained from a sample database, where each sample vector of the sample vector set includes multi-dimensional historical feature information $x_i$ associated with the application.

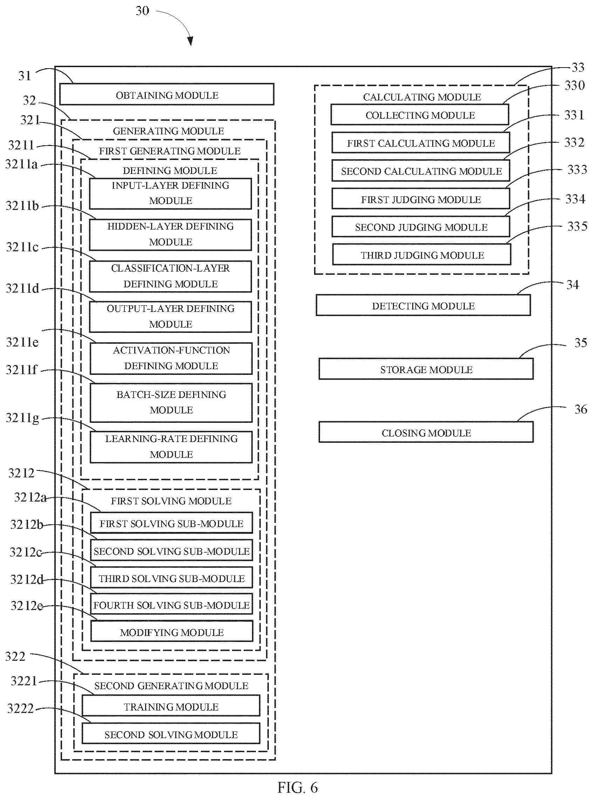

FIG. 6 is a schematic structural diagram illustrating a device for managing and controlling an application according to embodiments. As illustrated in FIG. 6, the device 30 further includes a detecting module 34. The detecting module 34 is configured to detect whether the application is switched to the background. The device 30 further includes a storage module 35. The storage module 35 is configured to store historical feature information $x_i$ associated with the application.

For the multi-dimensional historical feature information associated with the application, reference may be made to feature information of respective dimensions listed in Table 2.

Table 2

| Dimension | Feature information |
|---|---|
| 1 | Time length between a time point at which the application was recently switched to the background and a current time point |
| 2 | Accumulated duration of a screen-off state during a period between a time point at which the application was recently switched to the background and the current time point |
| 3 | a screen state (i.e., a screen-on state or a screen-off state) at the current time point |
| 4 | Ratio of the number of time lengths falling within a range of 0-5 minutes to the number of all time lengths in a histogram associated with duration that the application is in the background |
| 5 | Ratio of the number of time lengths falling within a range of 5-10 minutes to the number of all time lengths in the histogram associated with duration that the application is in the background |
| 6 | Ratio of the number of time lengths falling within a range of 10-15 minutes to the number of all time lengths in the histogram associated with duration that the application is in the background |
| 7 | Ratio of the number of time lengths falling within a range of 15-20 minutes to the number of all time lengths in the histogram associated with duration that the application is in the background |
| 8 | Ratio of the number of time lengths falling within a range of 20-25 minutes to the number of all time lengths in the histogram associated with duration that the application is in the background |
| 9 | Ratio of the number of time lengths falling within a range of 25-30 minutes to the number of all time lengths in the histogram associated with duration that the application is in the background |
| 10 | Ratio of the number of time lengths falling within a range of more than 30 minutes to the number of all time lengths in the histogram associated with duration that the application is in the background |

It should be noted that, the 10-dimensional feature information illustrated in Table 2 is merely an exemplary embodiment of the disclosure, and the multi-dimensional historical feature information of the disclosure includes, but is not limited to, the above 10-dimensional historical feature information illustrated in Table 1. The multi-dimensional historical feature information may include one of, at least two of, or all of the dimensions listed in Table 1, or may further include feature information of other dimensions (e.g., a charging connection state (i.e., not being charged or being charged) at the current time point, current remaining electric quantity, a WiFi connection state at the current time point, or the like), and which is not limited.

In some embodiments, the multi-dimensional historical feature information is embodied as 6-dimensional historical feature information. The 6-dimensional historical feature information is as follows. A: duration that the application resides in the background. B: a screen state (1: screen-on, 0: screen-off). C: number of times the application is used in a week. D: accumulated duration that the application is used in the week. E: a WiFi connection state (1: connected, 0: disconnected). F: a charging connection state (1: being charged, 0: not being charged).

The generating module 32 is configured to generate a first training model by performing calculation on the sample vector set based on a BP neural network algorithm, and generate a second training model based on a non-linear support vector machine algorithm.

The generating module 32 includes a first generating module 321 and a second generating module 322. The first generating module 321 is configured to generate the first training model by performing calculation on the sample vector set based on the BP neural network algorithm. The second generating module 322 is configured to generate the second training model based on the non-linear support vector machine algorithm.

As illustrated in FIG. 6, the first generating module 321 includes a defining module 3211 and a first solving module 3212. The defining module 3211 is configured to define a network structure. In some embodiments, the defining module 3211 includes an input-layer defining module 3211a, a hidden-layer defining module 3211b, a classification-layer defining module 3211c, an output-layer defining module 3211d, an activation-function defining module 3211e, a batch-size defining module 3211f, and a learning-rate defining module 3211g.

The input-layer defining module 3211a is configured to set an input layer, where the input layer includes $N$ nodes, and the number of nodes of the input layer is the same as the number of dimensions of the historical feature information $x_i$.

In some embodiments, to simplify the calculation, the number of dimensions of the historical feature information $x_i$ is set to be less than 10, and the number of nodes of the input layer is set to be less than 10. For example, the historical feature information $x_i$ is 6-dimensional historical feature information, and the input layer includes 6 nodes.

The hidden-layer defining module 3211b is configured to set a hidden layer, where the hidden layer includes $M$ nodes.

In some embodiments, the hidden layer includes multiple hidden sublayers. To simplify the calculation, the number of nodes of each of the hidden sublayers is set to be less than 10. For example, the hidden layer includes a first hidden sublayer, a second hidden sublayer, and a third hidden sublayer. The first hidden sublayer includes 10 nodes, the second hidden sublayer includes 5 nodes, and the third hidden sublayer includes 5 nodes.

The classification-layer defining module 3211c is configured to set a classification layer, where the classification layer is based on a softmax function, where the softmax function is: $p(c = k \mid z) = \dfrac{e^{z_k}}{\sum_{j=1}^{C} e^{z_k}}$, where $p$ is predicted probability, $z_k$ is a median value, $C$ is the number of predictied result categories, and $e^{z_j}$ is a $j^{th}$ median value.

The output-layer defining module 3211d is configured to set an output layer, where the output layer includes two nodes.

The activation-function defining module 3211e is configured to set an activation function, where the activation function is based on a sigmoid function, where the sigmoid function is: $f(x) = \dfrac{1}{1 + e^{-x}}$, where $f(x)$ has a range of 0 to 1.

The batch-size defining module 3211f is configured to set a batch size, where the batch size is A.

The batch size can be flexibly adjusted according to actual application scenarios. In some embodiments, the batch size is in a range of 50-200. For example, the batch size is 128.

The learning-rate defining module 3211g is configured to set a learning rate, where the learning rate is $B$.

The learning rate can be flexibly adjusted according to actual application scenarios. In some embodiments, the learning rate is in a range of 0.1-1.5. For example, the learning rate is 0.9.

It should be noted that, the order of execution of the operations of setting the input layer by the input-layer defining module 3211a, the operations of setting the hidden layer by the hidden-layer defining module 3211b, the operations of setting the classification layer by the classification-layer defining module 3211c, the operations of setting the output layer by the output-layer defining module 3211d, the operations of setting the activation function by the activation-function defining module 3211e, the operations of setting the batch size by the batch-size defining module 3211f, and the operations of setting the learning rate by the learning-rate defining module 3211g can be flexibly adjusted, which is not limited according to embodiments of the disclosure.

The first solving module 3212 is configured to obtain the first training model by taking the sample vector set into the network structure for calculation. In some embodiments, the first solving module 3212 includes a first solving sub-module 3212a, a second solving sub-module 3212b, a third solving sub-module 3212c, a fourth solving sub-module 3212d, and a modifying module 3212e.

The first solving sub-module 3212a is configured to obtain an output value of the input layer by inputting the sample vector set into the input layer for calculation.

The second solving sub-module 3212b is configured to obtain an output value of the hidden layer by inputting the output value of the input layer into the hidden layer.

The output value of the input layer is an input value of the hidden layer. In some embodiments, the hidden layer includes multiple hidden sublayers. The output value of the input layer is an input value of a first hidden sublayer, an output value of the first hidden sublayer is an input value of a second hidden sublayer, an output value of the second hidden sublayer is an input value of a third hidden sublayer, and so forth.

The third solving sub-module 3212c is configured to obtain predicted probability $[p_1\ p_2]^T$ by inputting the output value of the hidden layer into the classification layer for calculation.

The output value of the hidden layer is an input value of the classification layer.

The fourth solving sub-module 3212d is configured to obtain a predicted result y by inputting the predicted probability into the output layer for calculation, where $y=[1\ 0]^T$ when $p_1$, is greater than $p_2$, and $y=[0\ 1]^T$ when $p_1$ is smaller than or equal to $p_2$.

An output value of the classification layer is an input value of the output layer.

The modifying module 3212e is configured to obtain the first training model by modifying the network structure according to the predicted result y.

The second generating module 322 includes a training module 3221 and a second solving module 3222.

The training module 3221 is configured to generate, for each of the sample vectors of the sample vector set, a labeling result $y_i$ for the sample vector by labeling the sample vector.

In some embodiments, for each of the sample vectors of the sample vector set, the sample vector is labelled. Each sample vector is taken into the non-linear support vector machine algorithm to obtain a labeling result $y_i$, and accordingly a sample-vector result set $T = \{(x_1, y_1), (x_2, y_2),...,(x_m, y_m)\}$ is obtained. Input the sample vectors $x_i \in R^n$, $y_i \in \{+1, -1\}$, $i = 1,2,3,..., n$, $R^n$ represents an input space corresponding to the sample vector, $n$ represents the number of dimensions of the input space, and $y_i$ represents a labeling result corresponding to the input sample vector.

The second solving module 3222 is configured to obtain the second training model by defining a Gaussian kernel function.

In some embodiments, the kernel function is the Gaussian kernel function $K(x, x_i) = \exp\left(-\dfrac{\|x-x_i\|^2}{2\sigma^2}\right)$,

where $K(x, x_i)$ is an Euclidean distance from any point $x$ to a center $x_i$ in a space, and $\sigma$ is a width parameter of the Gaussian kernel function.

In some embodiments, the second solving module 3222 is configured to: define the Gaussian kernel function; and obtain the second training model by defining a model function and a classification decision function according to the Gaussian kernel function. The model function is: $\sum\limits_{i=1}^{m} \alpha_i y_i K(x, x_i) + b = 0$. The classification decision function is:

$$f(x) = \begin{cases} +1, & if\ \sum\limits_{i=1}^{m} \alpha_i y_i K(x, x_i) + b > 0 \\ -1, & if\ \sum\limits_{i=1}^{m} \alpha_i y_i K(x, x_i) + b < 0 \end{cases}$$, where $f(x)$ is a classification decision value, $a_i$ is a Lagrange factor, $b$ is a bias coefficient. When $f(x)=1$, it means that the application needs to be closed. When $f(x)=1$, it means that the application needs to be retained.

In some embodiments, the second solving module 3222 is configured to: define the Gaussian kernel function; define the model function and the classification decision function according to the Gaussian kernel function; define an objective optimization function according to the model function and the classification decision function; and obtain the second training model by obtaining an optimal solution of the objective optimization function according to a sequential minimal optimization algorithm. The objective optimization function is: $\min_{\alpha} \frac{1}{2} \sum_{i=1}^{m} \sum_{j=1}^{m} \alpha_i \alpha_j y_i y_j (x_i \bullet x_j) - \sum_{i=1}^{m} \alpha_i$ , where

$$s.t. \quad \sum_{i=1}^{m} \alpha_i y_i = 0, \alpha_i > 0, i = 1, 2, ..., m$$

the objective optimization function is used to obtain a minimum value for parameters ($a_1$, $a_2$,..., $a_i$), $a_i$ corresponds to a training sample ($x_i$, $y_i$), and the total number of variables is equal to capacity $m$ of the training samples.

In some embodiments, the optimal solution is recorded as $\alpha^* = (\alpha_1^*, \alpha_2^*, ..., \alpha_m^*)$, the second training model

is: $g(x) = \sum_{i=1}^{m} \alpha_i y_i K(x, x_i) + b$ where g(x) is an output value of the second training model, and the output value is second closing probability.

The calculating module 33 is configured to: obtain first closing probability by taking current feature information s associated with the application into the first training model for calculation upon detecting that the application is switched to background; obtain second closing probability by taking the current feature information s associated with the application into the second training model for calculation when the first closing probability is within a hesitation interval; and close the application when the second closing probability is greater than a judgment value.

In some embodiments, as illustrated in FIG. 6, the calculating module 33 includes a collecting module 330, a first calculating module 331, and a second calculating module 332.

The collecting module 330 is configured to collect the current feature information s associated with the application upon detecting that the application is switched to the background.

The number of dimensions of the collected current feature information s associated with the application is the same as the number of dimensions of the collected historical feature information $x_i$ associated with the application.

The first calculating module 331 is configured to obtain the first closing probability by taking the current feature information s into the first training model for calculation upon detecting that the application is switched to the background.

Probability $[p_1' \; p_2']^T$ determined in the classification layer can be obtained by taking the current feature information s into the first training model for calculation, where $p_1'$ is the first closing probability and $p_2'$ is first retention probability.

The calculating module 33 further includes a first judging module 333. The first judging module 333 is configured to determine whether the first closing probability is within the hesitation interval.

The hesitation interval is in a range of 0.4-0.6 for example, the minimum value of the hesitation interval is 0.4, and the maximum value of the hesitation interval is 0.6.

The second calculating module 332 is configured to obtain the second closing probability by taking the current feature information s associated with the application into the second training model for calculation when the first closing probability is within the hesitation interval.

The current feature information s is taken into the formula $g(s) = \sum_{i=1}^{m} \alpha_i y_i K(s, x_i) + b$ to calculate the second closing probability $g(s)$.

The calculating module 33 further includes a second judging module 334. The second judging module 334 is configured to determine whether the second closing probability is greater than the judgment value.

It should be noted that, the judgment value may be set to be 0. When $g(s) > 0$, close the application; when $g(s) < 0$, retain the application.

The calculating module 33 further includes a third judging module 335. The third judging module 335 is configured to determine whether the first closing probability is smaller than a minimum value of the hesitation interval or greater than a maximum value of the hesitation interval.

When the first closing probability is smaller than the minimum value of the hesitation interval, retain the application. When the first closing probability is greater than the maximum value of the hesitation interval, close the application.

In some embodiments, the collecting module 331 is further configured to periodically collect the current feature information s according to a predetermined collecting time and store the current feature information s into the storage module 35. In some embodiments, the collecting module 331 is further configured to collect the current feature information s corresponding to a time point at which the application is detected to be swiched to the background, and input the current feature information s to the calculating module 33, and the calculating module 33 takes the current feature information into the training models for calculation.

The device 30 further includes a closing module 36. The closing module 36 is configured to close the application upon determining that the application needs to be closed.

According to the device for managing and controlling an application of embodiments of the disclosure, the historical feature information $x_i$ is obtained. The first training model is generated based on the BP neural network algorithm. The second training model is generated based on the non-linear support vector machine algorithm. Upon detecting that the application is switched to the background, the first closing probability is obtained by taking the current feature information s associated with the application into the first training model. When the first closing probability is within the hesitation interval, the second closing probability is obtained by taking the current feature information *s* associated with the application into the second training model for calculation. Then, whether the application needs to be closed can be determined. In this way, it is possible to intelligently close the application.

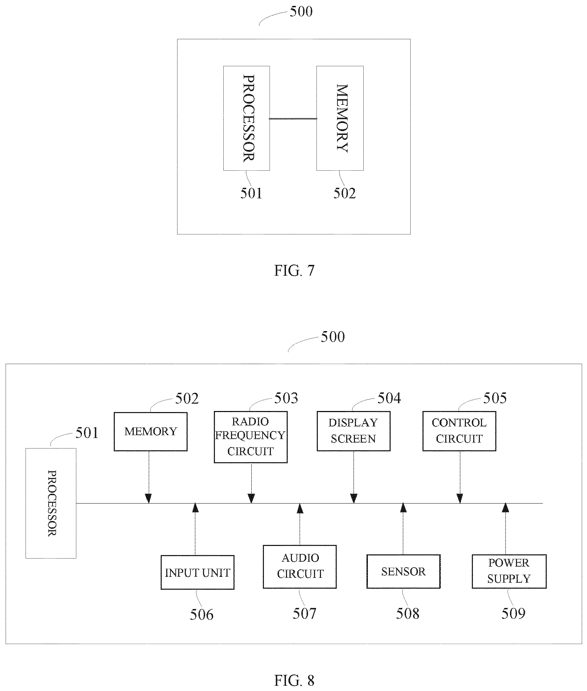

FIG. 7 is a schematic structural diagram illustrating an electronic device according to embodiments. As illustrated in FIG. 7, an electronic device 500 includes a processor 501 and a memory 502. The processor 501 is electrically coupled with the memory 502.

The processor 501 is a control center of the electronic device 500. The processor 501 is configured to connect various parts of the entire electronic device 500 through various interfaces and lines. The processor 501 is configured to execute various functions of the electronic device and process data by running or loading programs stored in the memory 502 and invoking data stored in the memory 502, thereby monitoring the entire electronic device 500.

In the embodiment, the processor 501 of the electronic device 500 is configured to load instructions corresponding to processes of one or more programs into the memory 502 according to the following operations, and to run programs stored in the memory 502, thereby implementing various functions. A sample vector set associated with an application is obtain, where the sample vector set contains multiple sample vectors, and each of the multiple sample vectors includes multi-dimensional historical feature information $x_i$ associated with the application. A first training model is generated by performing calculation on the sample vector set based on a BP neural network algorithm. A second training model is generated based on a non-linear support vector machine algorithm. Upon detecting that the application is switched to background, first closing probability is obtained by taking current feature information *s* associated with the application into the first training model for calculation. When the first closing probability is within a hesitation interval, second closing probability is obtained by taking the current feature information *s* associated with the application into the second training model for calculation. When the second closing probability is greater than a judgment value, close the application.

It should be noted that, the application may be any application such as a chat application, a video application, a playback application, a shopping application, a bicycle-sharing application, a mobile banking application, or the like.

The sample vector set associated with the application may be obtained from a sample database, where each sample vector of the sample vector set includes multi-dimensional historical feature information $x_i$ associated with the application.

For the multi-dimensional historical feature information associated with the application, reference may be made to feature information of respective dimensions listed in Table 3.

Table 3

| Dimension | Feature information |
|---|---|
| 1 | Time length between a time point at which the application was recently switched to the background and a current time point |
| 2 | Accumulated duration of a screen-off state during a period between a time point at which the application was recently switched to the background and the current time point |
| 3 | a screen state (i.e., a screen-on state or a screen-off state) at the current time point |
| 4 | Ratio of the number of time lengths falling within a range of 0-5 minutes to the number of all time lengths in a histogram associated with duration that the application is in the background |
| 5 | Ratio of the number of time lengths falling within a range of 5-10 minutes to the number of all time lengths in the histogram associated with duration that the application is in the background |
| 6 | Ratio of the number of time lengths falling within a range of 10-15 minutes to the number of all time lengths in the histogram associated with duration that the application is in the background |
| 7 | Ratio of the number of time lengths falling within a range of 15-20 minutes to the number of all time lengths in the histogram associated with duration that the application is in the background |
| 8 | Ratio of the number of time lengths falling within a range of 20-25 minutes to the number of all time lengths in the histogram associated with duration that the application is in the background |

(continued)

| Dimension | Feature information |
|---|---|
| 9 | Ratio of the number of time lengths falling within a range of 25-30 minutes to the number of all time lengths in the histogram associated with duration that the application is in the background |
| 10 | Ratio of the number of time lengths falling within a range of more than 30 minutes to the number of all time lengths in the histogram associated with duration that the application is in the background |

It should be noted that, the 10-dimensional feature information illustrated in Table 3 is merely an exemplary embodiment of the disclosure, and the multi-dimensional historical feature information of the disclosure includes, but is not limited to, the above 10-dimensional historical feature information illustrated in Table 1. The multi-dimensional historical feature information may include one of, at least two of, or all of the dimensions listed in Table 1, or may further include feature information of other dimensions (e.g., a charging connection state (i.e., not being charged or being charged) at the current time point, current remaining electric quantity, a WiFi connection state at the current time point, or the like), and which is not limited.

In some embodiments, the multi-dimensional historical feature information is embodied as 6-dimensional historical feature information. The 6-dimensional historical feature information is as follows. A: duration that the application resides in the background. B: a screen state (1: screen-on, 0: screen-off). C: number of times the application is used in a week. D: accumulated duration that the application is used in the week. E: a WiFi connection state (1: connected, 0: disconnected). F: a charging connection state (1: being charged, 0: not being charged).

In some embodiments, the instructions operable with the processor 501 to generate the first training model by performing calculation on the sample vector set based on the BP neural network algorithm are operable with the processor 501 to: define a network structure; and obtain the first training model by taking the sample vector set into the network structure for calculation.

The instructions operable with the processor 501 to define the network structure are operable with the processor 501 to carry out following actions.

An input layer is set, where the input layer includes N nodes, and the number of nodes of the input layer is the same as the number of dimensions of the historical feature information $x_i$.

In some embodiments, to simplify the calculation, the number of dimensions of the historical feature information $x_i$ is set to be less than 10, and the number of nodes of the input layer is set to be less than 10. For example, the historical feature information $x_i$ is 6-dimensional historical feature information, and the input layer includes 6 nodes.

A hidden layer is set, where the hidden layer includes $M$ nodes.

In some embodiments, the hidden layer includes multiple hidden sublayers. To simplify the calculation, the number of nodes of each of the hidden sublayers is set to be less than 10. For example, the hidden layer includes a first hidden sublayer, a second hidden sublayer, and a third hidden sublayer. The first hidden sublayer includes 10 nodes, the second hidden sublayer includes 5 nodes, and the third hidden sublayer includes 5 nodes.

A classification layer is set, where the classification layer is based on a softmax function, where the softmax function is: $p\left(c=k\mid z\right)=\dfrac{e^{Z_k}}{\sum_{j=1}^{C}e^{Z_k}}$ , where $p$ is predicted probability, $Z_k$ is a median value, $C$ is the number of predictied result categories, and $e^{Zj}$ is a $j^{\text{th}}$ median value;

An output layer is set, where the output layer includes two nodes.

An activation function is set, where the activation function is based on a sigmoid function, where the sigmoid function is: $f\left(x\right)=\dfrac{1}{1+e^{-x}}$ , where $f(x)$ has a range of 0 to 1.

A batch size is set, where the batch size is A.

The batch size can be flexibly adjusted according to actual application scenarios. In some embodiments, the batch size is in a range of 50-200. For example, the batch size is 128.

A learning rate is set, where the learning rate is $B$.

The learning rate can be flexibly adjusted according to actual application scenarios. In some embodiments, the learning rate is in a range of 0.1-1.5. For example, the learning rate is 0.9.

It should be noted that, the order of execution of the operations of setting the input layer, the operations of setting the hidden layer, the operations of setting the classification layer, the operations of setting the output layer, the operations of setting the activation function, the operations of setting the batch size, and the operations of setting the learning rate can be flexibly adjusted, which is not limited according to embodiments of the disclosure.

The instructions operable with the processor 501 to obtain the first training model by taking the sample vector set into the network structure for calculation are operable with the processor 501 to carry out following actions.

An output value of the input layer is obtained by inputting the sample vector set into the input layer for calculation.

An output value of the hidden layer is obtained by inputting the output value of the input layer into the hidden layer.

The output value of the input layer is an input value of the hidden layer. In some embodiments, the hidden layer includes multiple hidden sublayers. The output value of the input layer is an input value of a first hidden sublayer, an output value of the first hidden sublayer is an input value of a second hidden sublayer, an output value of the second hidden sublayer is an input value of a third hidden sublayer, and so forth.

Predicted probability $[p_1\ p_2]^T$ is obtained by inputting the output value of the hidden layer into the classification layer for calculation.

The output value of the hidden layer is an input value of the classification layer. In some embodiments, the hidden layer includes multiple hidden sublayers. An output value of the last hidden sublayer is the input value of the classification layer.

A predicted result $y$ is obtained by inputting the predicted probability into the output layer for calculation, where $y=[1\ 0]^T$ when $p_1$, is greater than $p_2$, and $y=[0\ 1]^T$ when $p_1$, is smaller than or equal to $p_2$.

An output value of the classification layer is an input value of the output layer.

The first training model is obtained by modifying the network structure according to the predicted result $y$.

In some embodiments, the instructions operable with the processor 501 to generate the second training model based on the non-linear support vector machine algorithm are operable with the processor 501 to: for each of the sample vectors of the sample vector set, generate a labeling result $y_i$ for the sample vector by labeling the sample vector; and obtain the second training model by defining a Gaussian kernel function.

In some embodiments, for each of the sample vectors of the sample vector set, the sample vector is labelled. Each sample vector is taken into the non-linear support vector machine algorithm to obtain a labeling result $y_i$, and accordingly a sample-vector result set $T = \{(x_1,\ y_1),(x_2,\ y_2),...,(x_m,\ y_m)\}$ is obtained. Input the sample vectors $x_i \in R^n$, $y_i \in \{+1, -1\}$, $i = 1,2,3,..., n$, $R^n$ represents an input space corresponding to the sample vector, $n$ represents the number of dimensions of the input space, and $y_i$ represents a labeling result corresponding to the input sample vector.

In some embodiments, the kernel function is the Gaussian kernel function

$$K(x,\ x_i) = \exp\left(-\frac{\|x-x_i\|^2}{2\sigma^2}\right),$$

where $K(x,\ x_i)$ is an Euclidean distance from any point $x$ to a center $x_i$ in a space, and $\sigma$ is a width parameter of the Gaussian kernel function.

In some embodiments, the instructions operable with the processor 501 to obtain the second training model by defining the Gaussian kernel function are operable with the processor 501 to carry out following actions. The Gaussian kernel function is defined. The second training model is obtained by defining a model function and a classification decision function according to the Gaussian kernel function. The model function is: $\sum_{i=1}^{m}\alpha_i y_i K(x,\ x_i)+b = 0$. The classification decision function is:

$$f(x)=\begin{cases} +1, & if \sum_{i=1}^{m}\alpha_i y_i K(x,x_i)+b > 0 \\ -1, & if \sum_{i=1}^{m}\alpha_i y_i K(x,x_i)+b < 0 \end{cases},$$

where $f(x)$ is a classification decision value, $a_i$ is a Lagrange factor, $b$ is a bias coefficient. When $f(x)=1$, it means that the application needs to be closed. When $f(x)=-1$, it means that the application needs to be retained.

In some embodiments, the instructions operable with the processor 501 to obtain the second training model by defining the Gaussian kernel function and defining the model function and the classification decision function according to the Gaussian kernel function are operable with the processor 501 to carry out following actions. The Gaussian kernel function is defined. The model function and the classification decision function are defined according to the Gaussian kernel function. An objective optimization function is defined according to the model function and the classification decision function. The second training model is obtained by obtaining an optimal solution of the objective optimization function according to a sequential minimal optimization algorithm. The objective optimization function is:

$$\min_{\alpha} \frac{1}{2} \sum_{i=1}^{m} \sum_{j=1}^{m} \alpha_i \alpha_j y_i y_j (x_i \bullet x_j) - \sum_{i=1}^{m} \alpha_i \, ,$$

$$s.t. \quad \sum_{i=1}^{m} \alpha_i y_i = 0, \alpha_i > 0, i = 1, 2, \ldots, m$$

where the objective optimization function is used to obtain a minimum value for parameters $(a_1, a_2, \ldots, a_i)$, $a_i$ corresponds to a training sample $(x_i, y_i)$, and the total number of variables is equal to capacity $m$ of the training samples.

In some embodiments, the optimal solution is recorded as $\alpha^* = (\alpha_1^*, \alpha_2^*, \ldots, \alpha_m^*)$, the second training model

is: $g(x) = \sum_{i=1}^{m} \alpha_i y_i K(x, x_i) + b$ where $g(x)$ is an output value of the second training model, and the output value is second closing probability.

In some embodiments, upon detecting that the application is switched to the background, the instructions operable with the processor 501 to take the current feature information $s$ associated with the application into training models for calculation are operable with the processor 501 to carry out following actions.

The current feature information s associated with the application is collected.

The number of dimensions of the collected current feature information $s$ associated with the application is the same as the number of dimensions of the collected historical feature information $x_i$ associated with the application.

The first closing probability is obtained by taking the current feature information s into the first training model for calculation.

Probability $[p_1' \; p_2']^T$ determined in the classification layer can be obtained by taking the current feature information $s$ into the first training model for calculation, where $p_1'$ is the first closing probability and $p_2'$ is first retention probability.

Whether the first closing probability is within the hesitation interval is determined.

The hesitation interval is in a range of 0.4-0.6 for example, the minimum value of the hesitation interval is 0.4, and the maximum value of the hesitation interval is 0.6.

When the first closing probability is within the hesitation interval, the second closing probability is obtained by taking the current feature information $s$ associated with the application into the second training model for calculation.

The current feature information s is taken into the formula $g(s) = \sum_{i=1}^{m} \alpha_i y_i K(s, x_i) + b$ to calculate the second closing probability $g(s)$.

Whether the second closing probability is greater than the judgment value is determined.

It should be noted that, the judgment value may be set to be 0. When $g(s) > 0$, close the application; when $g(s) < 0$, retain the application.

Whether the first closing probability is smaller than a minimum value of the hesitation interval or greater than a maximum value of the hesitation interval is determined.

When the first closing probability is smaller than the minimum value of the hesitation interval, retain the application. When the first closing probability is greater than the maximum value of the hesitation interval, close the application.

The memory 502 is configured to store programs and data. The programs stored in the memory 502 include instructions that are executable by the processor. The programs can form various functional modules. The processor 501 executes various functional applications and data processing by running the programs stored in the memory 502.

FIG. 8 is a schematic structural diagram illustrating an electronic device according to other embodiments. In some embodiments, as illustrated in FIG. 8, the electronic device 500 further includes a radio frequency circuit 503, a display screen 504, a control circuit 505, an input unit 506, an audio circuit 507, a sensor 508, and a power supply 509.

The radio frequency circuit 503 is configured to transmit and receive (i.e., transceive) radio frequency signals, and communicate with a server or other electronic devices through a wireless communication network.

The display screen 504 is configured to display information entered by a user or information provided for the user as well as various graphical user interfaces of the terminal. These graphical user interfaces may be composed of images, text, icons, videos, and any combination thereof.

The control circuit 505 is electrically coupled with the display screen 504 and is configured to control the display screen 504 to display information.

The input unit 506 is configured to receive inputted numbers, character information, or user characteristic information (e.g., fingerprints), and to generate keyboard-based, mouse-based, joystick-based, optical, or trackball signal inputs, and other signal inputs related to user settings and function control.

The audio circuit 507 is configured to provide an audio interface between a user and the terminal through a speaker or a microphone.

The sensor 508 is configured to collect external environment information. The sensor 508 may include one or more of sensors such as an ambient light sensor, an acceleration sensor, and a gyroscope.

The power supply 509 is configured for supply power of various components of the electronic device 500. In some embodiments, the power supply 509 may be logically coupled with the processor 501 via a power management system to enable management of charging, discharging, and power consumption through the power management system.

Although not illustrated in FIG. 8, the electronic device 500 may further include a camera, a Bluetooth module, and the like, and the disclosure will not elaborate herein.

According to the electronic device of embodiments of the disclosure, the historical feature information $x_i$ is obtained. The first training model is generated based on the BP neural network algorithm, and the second training model is generated based on the non-linear support vector machine algorithm. Upon detecting that the application is switched to the background, the first closing probability is obtained by taking the current feature information $s$ associated with the application into the first training model for calculation. When the first closing probability is within the hesitation interval, the second closing probability is obtained by taking the current feature information $s$ associated with the application into the second training model for calculation. Then, whether the application needs to be closed can be determined. In this way, it is possible to intelligently close the application.

According to embodiments of the disclosure, a medium is further provided. The medium is configured to store multiple instructions which, when executed by a processor, are operable with the processor to execute any of the foregoing methods for managing and controlling an application.

Considering that the method and device for managing and controlling an application, the medium, and the electronic device provided by embodiments of the disclosure belong to a same concept, for details of specific implementation of the medium, reference may be made to the related descriptions in the foregoing embodiments, and it will not be described in further detail herein.

Those of ordinary skill in the art may understand that implementing all or part of the operations in the foregoing method embodiments may be accomplished through programs to instruct the relevant hardware to complete, and the programs may be stored in a computer readable storage medium. The storage medium may include a read-only memory (ROM), a random access memory (RAM), a magnetic disk or an optical disk, and the like.

While the the method and device for managing and controlling an application, the medium, and the electronic device have been described in detail above with reference to the exemplary embodiments, the scope of the disclosure is not limited thereto. As will occur to those skilled in the art, the disclosure is susceptible to various modifications and changes without departing from the spirit and principle of the disclosure. Therefore, the scope of the disclosure should be determined by the scope of the claims.

**Claims**

1. A method for managing and controlling an application, the method being applicable to an electronic device and comprising:

   obtaining a sample vector set associated with the application, the sample vector set containing a plurality of sample vectors, and each of the plurality of sample vectors comprising multi-dimensional historical feature information $x_i$ associated with the application;
   generating a first training model by performing calculation on the sample vector set based on a back propagation, BP, neural network algorithm, and generating a second training model based on a non-linear support vector machine algorithm;
   obtaining first closing probability by taking current feature information $s$ associated with the application into the first training model for calculation upon detecting that the application is switched to background;
   obtaining second closing probability by taking the current feature information $s$ associated with the application into the second training model for calculation when the first closing probability is within a hesitation interval; and
   closing the application when the second closing probability is greater than a judgment value.

2. The method for managing and controlling an application of claim 1, wherein generating the first training model by performing calculation on the sample vector set based on the BP neural network algorithm comprises:

> defining a network structure; and
> obtaining the first training model by taking the sample vector set into the network structure for calculation.

3. The method for managing and controlling an application of claim 2, wherein defining the network structure comprises:

> setting an input layer, wherein the input layer comprises $N$ nodes, and the number of nodes of the input layer is the same as the number of dimensions of the historical feature information $x_i$;
> setting a hidden layer, wherein the hidden layer comprises $M$ nodes;
> setting a classification layer, wherein the classification layer is based on a softmax function, wherein the softmax function is:

$$p(c = k \mid z) = \frac{e^{Z_k}}{\sum_{j=1}^{C} e^{Z_k}},$$

> wherein $p$ is predicted probability, $Z_k$ is a median value, $C$ is the number of predictied result categories, and $e^{Zj}$ is a $j^{th}$ median value;
> setting an output layer, wherein the output layer comprises two nodes;
> setting an activation function, wherein the activation function is based on a sigmoid function, wherein the sigmoid function is:

$$f(x) = \frac{1}{1 + e^{-x}},$$

> wherein $f(x)$ has a range of 0 to 1;
> setting a batch size, wherein the batch size is $A$; and
> setting a learning rate, wherein the learning rate is $B$.

4. The method for managing and controlling an application of claim 3, wherein obtaining the first training model by taking the sample vector set into the network structure for calculation comprises:

> obtaining an output value of the input layer by inputting the sample vector set into the input layer for calculation;
> obtaining an output value of the hidden layer by inputting the output value of the input layer into the hidden layer;
> obtaining predicted probability $[p_1\ p_2]^T$ by inputting the output value of the hidden layer into the classification layer for calculation, wherein $p_1$, represents predicted closing probability and $p_2$ represents predicted retention probability;
> obtaining a predicted result y by inputting the predicted probability into the output layer for calculation, wherein $y=[1\ 0]^T$ when $p_1$, is greater than $p_2$, and $y=[0\ 1]^T$ when $p_1$, is smaller than or equal to $p_2$; and
> obtaining the first training model by modifying the network structure according to the predicted result y.

5. The method for managing and controlling an application of claim 1, wherein generating the second training model based on the non-linear support vector machine algorithm comprises:

> for each of the sample vectors of the sample vector set, generating a labeling result $y_i$, for the sample vector by labeling the sample vector; and
> obtaining the second training model by defining a Gaussian kernel function.

6. The method for managing and controlling an application of claim 1, wherein the application is retained when the second closing probability is smaller than the judgment value.

7. The method for managing and controlling an application of claim 1, further comprising:
determining whether the first closing probability is smaller than a minimum value of the hesitation interval or greater than a maximum value of the hesitation interval, when the first closing probability is beyond the hesitation interval.

8. The method for managing and controlling an application of claim 7, further comprising:

    retaining the application, upon determining that the first closing probability is smaller than the minimum value of the hesitation interval; and
    closing the application, upon determining that the first closing probability is greater than the maximum value of the hesitation interval.

9. The method for managing and controlling an application of claim 1, wherein obtaining the first closing probability by taking the current feature information $s$ associated with the application into the first training model for calculation upon detecting that the application is switched to the background, obtaining the second closing probability by taking the current feature information $s$ associated with the application into the second training model for calculation when the first closing probability is within the hesitation interval, and closing the application when the second closing probability is greater than the judgment value comprise:

    collecting the current feature information $s$ associated with the application;
    obtaining the first closing probability by taking the current feature information $s$ into the first training model for calculation;
    determining whether the first closing probability is within the hesitation interval;
    obtaining the second closing probability by taking the current feature information $s$ associated with the application into the second training model for calculation;
    determining whether the second closing probability is greater than the judgment value; and
    determining whether the first closing probability is smaller than a minimum value of the hesitation interval or greater than a maximum value of the hesitation interval.

10. A device for managing and controlling an application, comprising:

    an obtaining module, configured to obtain a sample vector set associated with the application, the sample vector set containing a plurality of sample vectors, and each of the plurality of sample vectors comprising multi-dimensional historical feature information $x_i$ associated with the application;
    a generating module, configured to generate a first training model by performing calculation on the sample vector set based on a back propagation, BP, neural network algorithm, and generate a second training model based on a non-linear support vector machine algorithm; and
    a calculating module, configured to obtain first closing probability by taking current feature information $s$ associated with the application into the first training model for calculation upon detecting that the application is switched to background, obtain second closing probability by taking the current feature information s associated with the application into the second training model for calculation when the first closing probability is within a hesitation interval, and close the application when the second closing probability is greater than a judgment value.

11. A medium, configured to store a plurality of instructions which, when executed by a processor, are operable with the processor to execute the method for managing and controlling an application of any of claims 1 to 9.

12. An electronic device, comprising a memory and a processor and electrically coupled to the memory configured to store instructions and data;
    the instructions, when executed by the processor, being operable with the processor to:

    obtain a sample vector set associated with an application, the sample vector set containing a plurality of sample vectors, and each of the plurality of sample vectors comprising multi-dimensional historical feature information $x_i$ associated with the application;
    generate a first training model by performing calculation on the sample vector set based on a back propagation, BP, neural network algorithm, and generate a second training model based on a non-linear support vector machine algorithm;
    obtain first closing probability by taking current feature information $s$ associated with the application into the first training model for calculation upon detecting that the application is switched to background;
    obtain second closing probability by taking the current feature information $s$ associated with the application into the second training model for calculation when the first closing probability is within a hesitation interval; and
    close the application when the second closing probability is greater than a judgment value.

13. The electronic device of claim 12, wherein the instructions operable with the processor to generate the first training model by performing calculation on the sample vector set based on the BP neural network algorithm are operable with the processor to:

define a network structure; and
obtain the first training model by taking the sample vector set into the network structure for calculation.

14. The electronic device of claim 13, wherein the instructions operable with the processor to define the network structure are operable with the processor to:

set an input layer, wherein the input layer comprises $N$ nodes, and the number of nodes of the input layer is the same as the number of dimensions of the historical feature information $x_i$;
set a hidden layer, wherein the hidden layer comprises $M$ nodes;
set a classification layer, wherein the classification layer is based on a softmax function, wherein the softmax function is:

$$p(c = k \mid z) = \frac{e^{Z_k}}{\sum_{j=1}^{C} e^{Z_k}} ,$$

wherein $p$ is predicted probability, $Z_k$ is a median value, $C$ is the number of predictied result categories, and $e^{Zj}$ is a $j^{th}$ median value;
set an output layer, wherein the output layer comprises two nodes;
set an activation function, wherein the activation function is based on a sigmoid function, wherein the sigmoid function is:

$$f(x) = \frac{1}{1 + e^{-x}} ,$$

wherein $f(x)$ has a range of 0 to 1;
set a batch size, wherein the batch size is $A$; and
set a learning rate, wherein the learning rate is $B$.

15. The electronic device of claim 14, wherein the instructions operable with the processor to obtain the first training model by taking the sample vector set into the network structure for calculation are operable with the processor to:

obtain an output value of the input layer by inputting the sample vector set into the input layer for calculation;
obtain an output value of the hidden layer by inputting the output value of the input layer into the hidden layer;
obtain predicted probability $[p_1\ p_2]^T$ by inputting the output value of the hidden layer into the classification layer for calculation, wherein $p_1$ represents predicted closing probability and $p_2$ represents predicted retention probability;
obtain a predicted result y by inputting the predicted probability into the output layer for calculation, wherein $y=[1\ 0]^T$ when $p_1$ is greater than $p_2$, and $y=[0\ 1]^T$ when $p_1$ is smaller than or equal to $p_2$; and
obtain the first training model by modifying the network structure according to the predicted result $y$.

16. The electronic device of claim 12, wherein the instructions operable with the processor to generate the second training model based on the non-linear support vector machine algorithm are operable with the processor to:

for each of the sample vectors of the sample vector set, generate a labeling result $y_i$ for the sample vector by labeling the sample vector; and
obtain the second training model by defining a Gaussian kernel function.

17. The electronic device of claim 12, wherein the application is retained when the second closing probability is smaller than the judgment value.

18. The electronic device of claim 12, wherein the instructions are further operable with the processor to:
determine whether the first closing probability is smaller than a minimum value of the hesitation interval or greater

EP 3 706 043 A1

than a maximum value of the hesitation interval, when the first closing probability is beyond the hesitation interval.

19. The electronic device of claim 18, wherein the instructions are further operable with the processor to:

retain the application, upon determining that the first closing probability is smaller than the minimum value of the hesitation interval; and
close the application, upon determining that the first closing probability is greater than the maximum value of the hesitation interval.

20. The electronic device of claim 12, wherein the instructions operable with the processor to obtain the first closing probability by taking the current feature information $s$ associated with the application into the first training model for calculation upon detecting that the application is switched to the background, obtain the second closing probability by taking the current feature information $s$ associated with the application into the second training model for calculation when the first closing probability is within the hesitation interval, and close the application when the second closing probability is greater than the judgment value are operable with the processor to:

collect the current feature information $s$ associated with the application;
obtain the first closing probability by taking the current feature information $s$ into the first training model for calculation;
determine whether the first closing probability is within the hesitation interval;
obtain the second closing probability by taking the current feature information $s$ associated with the application into the second training model for calculation;
determine whether the second closing probability is greater than the judgment value; and
determine whether the first closing probability is smaller than a minimum value of the hesitation interval or greater than a maximum value of the hesitation interval.

22

```
                    ┌─────────────────┐
                    │    DATABASE     │
                    └────────┬────────┘
                             ▼
                    ┌─────────────────┐
                    │ HISTORICAL FEATURE │
                    │   INFORMATION   │
                    └────────┬────────┘
                             ▼
                    ┌─────────────────┐
                    │   ALGORITHMS    │
                    └────────┬────────┘
                             ▼
┌──────────────┐    ┌─────────────────┐    ┌──────────────────────┐
│CURRENT FEATURE│───▶│ TRAINING MODELS │───▶│WHETHER AN APPLICATION│
│ INFORMATION  │    └─────────────────┘    │    CAN BE CLOSED     │
└──────────────┘                           └──────────────────────┘
```

FIG. 1

APP *a*

APP *b*

BACKGROUND

APP *b*

BACKGROUND

MANAGING
AND
CONTROLLING

FIG. 2

S11

Obtaining a sample vector set associated with the application, where the sample vector set contains a plurality of sample vectors, and each of the plurality of sample vectors includes multi-dimensional historical feature information $x_i$ associated with the application

S12

Generating a first training model by performing calculation on the sample vector set based on a BP neural network algorithm, and generating a second training model based on a non-linear support vector machine algorithm

S13

Obtaining first closing probability by taking current feature information $s$ associated with the application into the first training model for calculation upon detecting that the application is switched to background, obtaining second closing probability by taking the current feature information $s$ associated with the application into the second training model for calculation when the first closing probability is within a hesitation interval, and closing the application when the second closing probability is greater than a judgment value

FIG. 3

S11

Obtaining a sample vector set associated with an application, where the sample vector set contains a plurality of sample vectors, and each of the plurality of sample vectors includes multi-dimensional historical feature information $x_i$ associated with the application

S12
S122

S121

Generating a first training model by performing calculation on the sample vector set based on a back propagation (BP) neural network algorithm

S1211

Generating a second training model based on a non-linear support vector machine algorithm

S1221

S1211a — Defining a network structure

S1211e

For each of the sample vectors of the sample vector set, generating a labeling result $y_i$ for the sample vector by labeling the sample vector

S1211b — Setting an input layer | Setting an activation function

S1211f

S1211c — Setting a hidden layer | Setting a batch size

S1222

S1211d — Setting a classification layer | Setting a learning rate

S1211g

Obtaining the second training model by defining a Gaussian kernel function

Setting an output layer

S1212

Obtaining the first training model by taking the sample vector set into the network structure for calculation

S1212a

Obtaining an output value of the input layer by inputting the sample vector set into the input layer for calculation

S1212b

Obtaining an output value of the hidden layer by inputting the output value of the input layer into the hidden layer

S1212c

Obtaining predicted probability by inputting the output value of the hidden layer into the classification layer for calculation

S1212d

Obtaining a predicted result $y$ by inputting the predicted probability into the output layer for calculation

S1212e

Obtaining the first training model by modifying the network structure according to the predicted result $y$

S13

Obtaining first closing probability by taking current feature information $s$ associated with the application into the first training model for calculation upon detecting that the application is switched to background, obtaining second closing probability by taking the current feature information $s$ associated with the application into the second training model for calculation when the first closing probability is within a hesitation interval, and closing the application when the second closing probability is greater than a judgment value

S131

Collecting the current feature information $s$ associated with the application

S132

Obtaining the first closing probability by taking the current feature information $s$ into the first training model for calculation

S133

Whether the first closing probability is within the hesitation interval?

NO

YES

S134

Obtaining the second closing probability by taking the current feature information $s$ associated with the application into the second training model for calculation

Whether the first closing probability is smaller than a minimum value of the hesitation interval or greater than a maximum value of the hesitation interval?

S136

YES

The first closing probability is smaller than the minimum value of the hesitation interval

The first closing probability is greater than the maximum value of the hesitation interval

S135

Whether the second closing probability is greater than the judgment value?

NO

RETAINING

YES

CLOSING

FIG. 4

FIG. 5

30

31 — OBTAINING MODULE

33
330
CALCULATING MODULE

32 — 
321 — GENERATING MODULE

COLLECTING MODULE — 331

3211 — FIRST GENERATING MODULE

FIRST CALCULATING MODULE — 332

3211a — DEFINING MODULE

SECOND CALCULATING MODULE — 333

INPUT-LAYER DEFINING MODULE

3211b — HIDDEN-LAYER DEFINING MODULE

FIRST JUDGING MODULE — 334

SECOND JUDGING MODULE — 335

3211c — CLASSIFICATION-LAYER DEFINING MODULE

THIRD JUDGING MODULE

3211d — OUTPUT-LAYER DEFINING MODULE

DETECTING MODULE — 34

3211e — ACTIVATION-FUNCTION DEFINING MODULE

STORAGE MODULE — 35

3211f — BATCH-SIZE DEFINING MODULE

CLOSING MODULE — 36

3211g — LEARNING-RATE DEFINING MODULE

3212 — FIRST SOLVING MODULE

3212a — 
3212b — FIRST SOLVING SUB-MODULE

3212c — SECOND SOLVING SUB-MODULE

3212d — THIRD SOLVING SUB-MODULE

3212e — FOURTH SOLVING SUB-MODULE

MODIFYING MODULE

322 — 
3221 — SECOND GENERATING MODULE

TRAINING MODULE

3222 — SECOND SOLVING MODULE

FIG. 6

500

PROCESSOR

501

MEMORY

502

FIG. 7

500

501

502
MEMORY

503
RADIO
FREQUENCY
CIRCUIT

504
DISPLAY
SCREEN

505
CONTROL
CIRCUIT

PROCESSOR

INPUT UNIT

506

AUDIO
CIRCUIT

507

SENSOR

508

POWER
SUPPLY

509

FIG. 8

## INTERNATIONAL SEARCH REPORT

International application No.

**PCT/CN2018/110519**

### A. CLASSIFICATION OF SUBJECT MATTER

G06K 9/62(2006.01)i

According to International Patent Classification (IPC) or to both national classification and IPC

### B. FIELDS SEARCHED

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, DWPI, SIPOABS, CNKI: 非线性支持向量机, 反向, 模型, 向量机, 神经网络, bp,应用, 概率, 特征, nonlinear support vector machine, background, model, vector machine, neural network, application, probability, feature

### C. DOCUMENTS CONSIDERED TO BE RELEVANT

| Category* | Citation of document, with indication, where appropriate, of the relevant passages | Relevant to claim No. |
|---|---|---|
| PX | CN 107844338 A (GUANGDONG OPPO MOBILE TELECOMMUNICATIONS CORP., LTD.) 27 March 2018 (2018-03-27) see description, paragraphs 35-272 | 1-20 |
| A | CN 104766097 A (QILU UNIVERSITY OF TECHNOLOGY) 08 July 2015 (2015-07-08) see entire document | 1-20 |
| A | US 2017132528 A1 (MICROSOFT TECHNOLOGY LICENSING LLC) 11 May 2017 (2017-05-11) see entire document | 1-20 |
| A | CN 101566612 A (FUDAN UNIVERSITY) 28 October 2009 (2009-10-28) see entire document | 1-20 |
| A | CN 104463243 A (THUNDER SOFTWARE TECHNOLOGY CO., LTD.) 25 March 2015 (2015-03-25) see entire document | 1-20 |

☐ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **27 November 2018** | **11 January 2019** |

| Name and mailing address of the ISA/CN | Authorized officer |
|---|---|
| **State Intellectual Property Office of the P. R. China (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/110519**

| Patent document cited in search report | | | Publication date (day/month/year) | Patent family member(s) | | | Publication date (day/month/year) |
|---|---|---|---|---|---|---|---|
| CN | 107844338 | A | 27 March 2018 | None | | | |
| CN | 104766097 | A | 08 July 2015 | CN | 104766097 | B | 05 January 2018 |
| US | 2017132528 | A1 | 11 May 2017 | None | | | |
| CN | 101566612 | A | 28 October 2009 | None | | | |
| CN | 104463243 | A | 25 March 2015 | CN | 104463243 | B | 29 September 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711047050